Europäisches Patentamt

European Patent Office

Office européen des brevets

(19)

(11) Numéro de publication : **0 054 448**
**B1**

(12) **FASCICULE DE BREVET EUROPÉEN**

(45) Date de publication du fascicule du brevet :
26.09.84

(21) Numéro de dépôt : **81401774.5**

(22) Date de dépôt : **06.11.81**

(51) Int. Cl.³ : **A 47 L 15/42**, F 16 K 31/04

(54) **Dispositif de distribution d'eau, et lave-vaisselle équipé d'un tel dispositif.**

(30) Priorité : **27.11.80 FR 8025186**

(43) Date de publication de la demande :
**23.06.82 Bulletin 82/25**

(45) Mention de la délivrance du brevet :
**26.09.84 Bulletin 84/39**

(84) Etats contractants désignés :
**DE GB IT**

(56) Documents cités :
**FR-A- 1 377 161**
**FR-A- 2 173 043**
**FR-A- 2 443 231**
**GB-A-    335 450**
**US-A- 2 960 990**
**US-A- 3 556 467**

(73) Titulaire : **ESSWEIN S.A.**
**67, quai Paul-Doumer**
**F-92400 Courbevoie (FR)**

(72) Inventeur : **Didier, Laurent**
**THOMSON-CSF SCPI 173, bld Haussmann**
**F-75360 Paris Cedex 08 (FR)**
Inventeur : **Tessier, Jack**
**THOMSON-CSF SCPI 173, bld Haussmann**
**F-75360 Paris Cedex 08 (FR)**

(74) Mandataire : **Phan, Chi Quy et al**
**THOMSON-CSF SCPI 173, Bld Haussmann**
**F-75379 Paris Cedex 08 (FR)**

EP 0 054 448 B1

## Description

La présente invention concerne un dispositif de distribution d'eau et un lave-vaisselle équipé d'un tel dispositif.

Les machines à laver la vaisselle au lave-vaisselle connues comportent habituellement un ou plusieurs paniers à vaisselle et plusieurs moulinets d'arrosage destinés à projeter de l'eau de lavage sur chacun de ces paniers.

Dans certaines de ces machines connues notamment du FR-A-1 377 161, l'eau de lavage est amenée simultanément à ces moulinets. Ce procédé permet d'avoir un système très simple à pompe de circulation d'eau alimentant directement ces moulinets c'est-à-dire sans nécessiter de dispositif de distribution mais a un inconvénient principal c'est d'avoir dans toutes opérations de lavage au niveau des moulinets des jets d'eau d'arrosage peu puissants, la pression des jets d'eau étant en effet divisée, et répartie sur l'ensemble de ces moulinets.

Dans d'autres machines connues, notamment du FR-A 2 443 231, l'eau de lavage est alternativement amenée à ces moulinets à travers un distributeur à clapet habituellement entraîné par un micromoteur. L'inconvénient du procédé précédent ne se reproduit pas, cependant quand un grippage ou un coincement du clapet du distributeur s'est produit et que ce micromoteur continue à fonctionner, il y a un risque relativement grand de détérioration du dispositif.

La présente invention ayant pour but d'éviter ces inconvénients permet de réaliser un dispositif perfectionné de distribution d'eau à distributeur à une voie d'entrée et à deux voies de sortie.

L'invention a également pour objet un lave-vaisselle équipé d'un tel dispositif de distribution d'eau.

Selon l'invention un dispositif de distribution d'eau ayant un distributeur à une voie d'entrée et deux voies de sortie, pourvu d'un clapet commandé par un système mécanique à micromoteur, pouvant fermer une de ces voies de sortie et mettre l'autre voie de sortie en communication avec la voie d'entrée, comprend dans ce système mécanique entre un téton d'entraînement d'une tige de commande du clapet et l'arbre du micromoteur, un ressort et une manivelle dont l'un dès bras est rendu solidaire de l'arbre de ce micromoteur et l'autre est relié à ce téton d'entraînement par l'intermédiaire de ce ressort, réalisant un basculement brusque du clapet lors d'un changement périodique de ses positions de fermeture des voies de sorties du distributeur et un fonctionnement du dispositif sans risque de détérioration du micromoteur qui continue à tourner lors d'un blocage de ce clapet.

Pour mieux faire comprendre l'invention, on décrit ci-après un certain nombre d'exemples de réalisation illustré par des dessins ci-annexés dont :

la figure 1 représente une vue schématique d'un lave-vaisselle équipé d'un dispositif de distribution d'eau, selon un premier exemple de réalisation de l'invention ;

la figure 2 représente une vue partielle et schématique d'un dispositif de distribution d'eau à distributeur à clapet, à une voie d'entrée et deux voies de sortie, réalisé selon l'invention, montrant en trait plein le clapet fermant une des voies de sortie et laissant la deuxième voie de sortie en communication avec la voie d'entrée, et en traits discontinus le clapet fermant cette deuxième voie de sortie ;

la figure 3 représente une vue partielle et schématique analogue à celle de la figure 2, montrant le clapet bloqué dans sa position de fermeture de la deuxième voie de sortie et laissant la première voie de sortie en communication avec la voie d'entrée ;

la figure 4 représente une vue partielle et schématique analogue à celle de la figure 2, montrant le clapet dans une position médiane mettant les deux voies de sortie simultanément en communication avec la voie d'entrée, et

la figure 5 représente une vue schématique d'une partie d'un lave-vaisselle équipé d'un dispositif de distribution d'eau, selon un deuxième exemple de réalisation de l'invention.

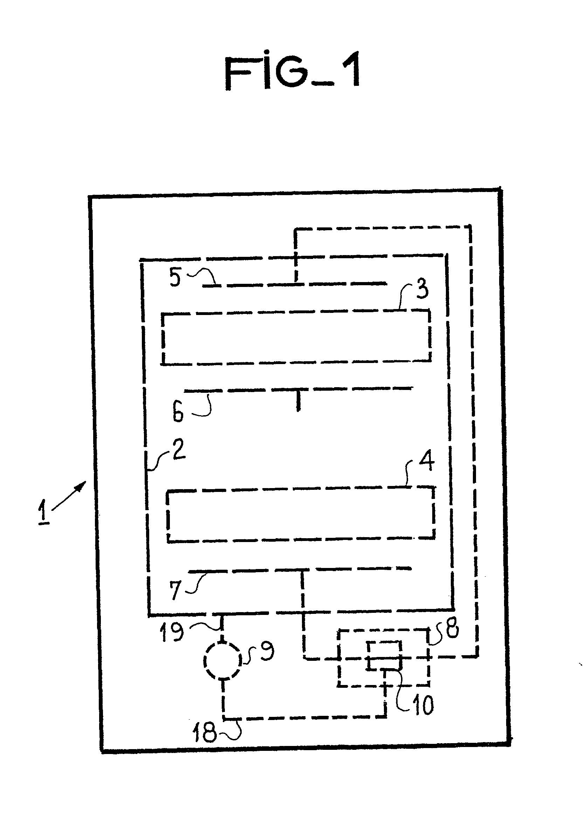

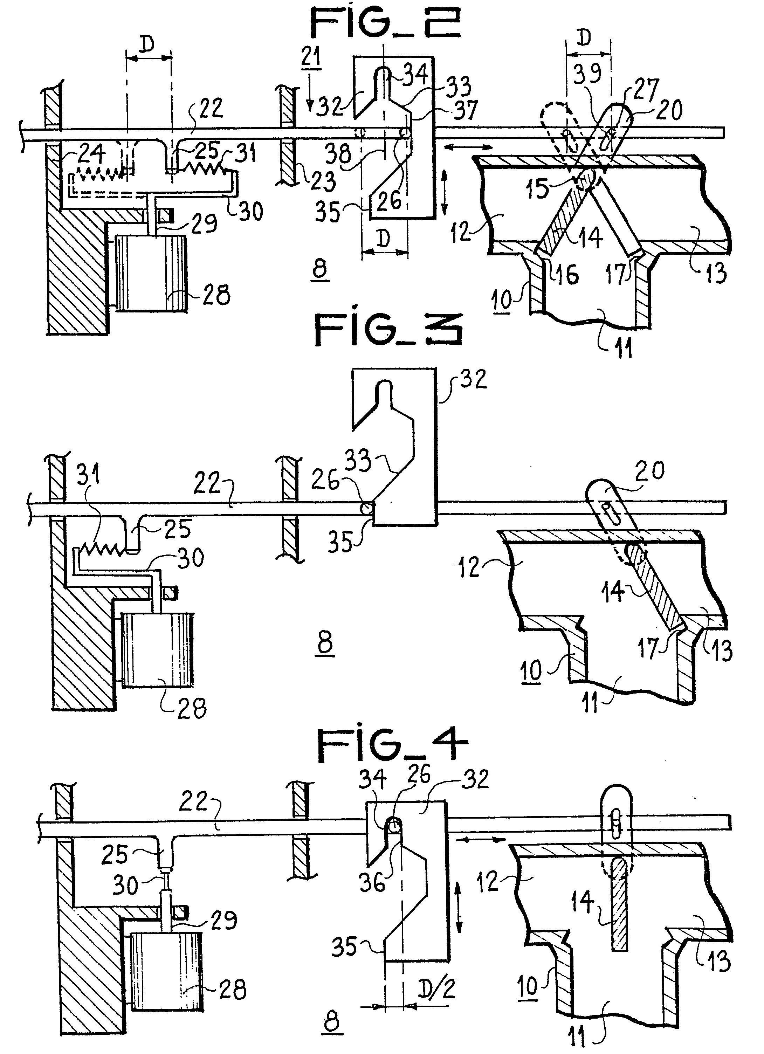

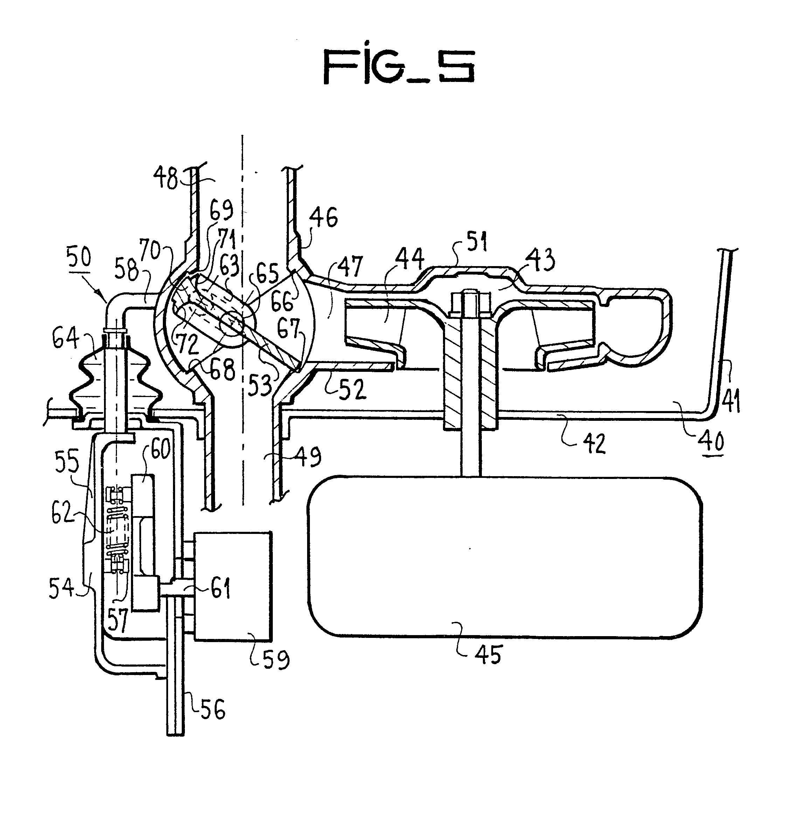

Un lave-vaisselle 1 schématiquement illustré dans la figure 1, comprend selon un premier exemple de réalisation de l'invention, dans sa cuve 2, deux paniers à vaisselle 3 et 4 respectivement arrosés par des moulinets 5, 6 et 7. Les moulinets 5 et 7 par exemple sont alimentés en eau, par un dispositif de distribution d'eau 8 muni d'une pompe 9. Le dispositif de distribution d'eau 8 comprend en outre un distributeur 10 ayant une voie d'entrée d'eau 11 et deux voies de sorties d'eau 12 et 13. Ce distributeur 10 comprend un clapet 14 pivotant autour d'un axe 15 pour soit être appliqué sur son siège 16, et fermer la première voie de sortie 12 et mettre en communication la voie d'entrée 11 avec la deuxième voie de sortie 13 (figure 2) soit être appliqué sur son siège 17 et fermer la deuxième voie de sortie 13 et mettre en communication la première voie de sortie avec la voie d'entrée 11 (figure 3) soit occuper une position médiane (figure 4) et mettre les deux voies de sortie 12 et 13 simultanément en communication avec la voie d'entrée 11. La voie d'entrée 11 est reliée à une tubulure de sortie 18 de la pompe 9 dont l'entrée 19 est reliée à l'intérieur de la cuve 2, à une partie la plus basse du fond de celle-ci. Le clapet pivotant 14 du distributeur 10 est prolongé à l'extérieur par un levier 20. Le distributeur 10 peut faire partie intégrante du corps de la pompe 9. Le dispositif de distribution d'eau comprend en outre un système mécanique de commande 21 du clapet 14 du distributeur 10. Ce système mécanique de commande 21 comprend une tige ou pièce coulissante de commande 22, maintenue axialement coulissante dans les deux sens, par des supports 23, 24, et munie sur sa longueur, d'un téton latéral d'entraînement 25, d'un téton latéral de blocage 26, et d'un téton latéral de commande 27 du clapet 14, et un micromoteur 28 muni d'une manivelle 30 dont l'un des bras est fixé sur son arbre 29 et l'autre bras est relié au téton d'entraînement 25 de la tige de commande par un ressort 31. Ce système mécanique peut comprendre un volet de verrouillage à came 32 coopérant avec le téton de blocage 26 pour contrôler le mouvement de coulissement de la tige de commande 22 et par conséquent la position du clapet pivotant 14, le téton de commande 27 de la tige 22 étant engagé dans un trou allongé 39 du levier 20 prolongeant le clapet 14 vers l'extérieur.

Le bras de la manivelle 30 qui est montée sur l'arbre 29 du micromoteur, a une longueur prédéterminée pour permettre (figure 2) à ce micromoteur lors de sa rotation et suivant deux dispositions diamétralement opposées de cette manivelle 30 de déplacer la tige de commande 22, le long de l'axe de cette dernière, d'une distance D, correspondant à celle qui permet à la tige 22 d'appliquer le clapet 14 respectivement sur ses deux sièges 16 et 17 afin de fermer les voies de sorties 12 et 13.

Le volet de verrouillage à came 32 est coulissant dans les deux sens d'une direction orthogonale à la direction de coulissement de la tige de commande 22. Le volet de verrouillage 32 comprend, dans son corps, une découpe formant une rampe de came 33 coopérant avec le téton latéral de blocage 26 de la tige de commande 22 pour contrôler le mouvement de coulissement de cette dernière. Cette rampe de came 33 ayant une forme qui présente suivant l'axe de coulissement du volet 32, en premier lieu à une de ses extrémités, une partie formant une encoche profonde 34 dont la largeur est légèrement supérieure à la dimension du téton de blocage 26, en deuxième lieu à sa deuxième extrémité, une partie formant une butée 35 latéralement décalée par rapport à une paroi 36 la plus éloignée des deux parois de l'encoche 34 d'une distance égale à la moitié de la distance D de déplacement de la tige de commande 22 (figure 4) et en troisième lieu dans sa zone centrale une partie formant un dégagement 37 sur les deux côtés latéraux d'une distance mesurée symétriquement par rapport à l'axe 38 de l'encoche 34, au moins égale à la distance D de déplacement de la tige de commande 22 augmentée d'une longueur égale à la dimension du téton de blocage 26. Les parties de la rampe de came 33 formant l'encoche 34, la butée 35 et le dégagement 37 sont reliées ensemble par des zones de liaison pour former une rampe de came 33 continue, facilitant le passage de l'une à l'autre de ces parties.

Au cours d'un fonctionnement du lave-vaisselle 1 pour un lavage normal, le volet de verrouillage à came 32 du dispositif de distribution d'eau 8 est mis et maintenu dans la position illustrée à la figure 2 de manière qu'il présente au téton de blocage 26 sa partie de rampe constituant le dégagement 37. Dans cette position le volet de verrouillage 32 ne gêne pas le mouvement de coulissement de la tige 22. Le micromoteur 28 peut, en tournant, provoquer par l'intermédiaire de la manivelle 30, du ressort 31, de la tige de commande 22 et du levier 20, et une fois par tour de cette manivelle 30, un basculement brusque du clapet 14 autour de son axe 15 pour l'appliquer soit sur son siège 16 soit sur son siège 17. L'eau du fond de la cuve 2 aspirée par la pompe 9 est refoulée dans l'entrée 11 du distributeur 10 est ainsi dirigée alternativement sur les voies de sorties 12 et 13 de ce distributeur 10 pour alimenter les moulinets d'arrosage 5, 6 d'une part et 7 d'autre part. La liaison mécanique réalisée par le ressort 31 et la manivelle 30, entre l'arbre 29 du micromoteur et le téton d'entraînement 25 de la tige de commande 22 permet au clapet 14 de fermer respectivement et périodiquement chacune des voies de sorties 12 et 13 durant un temps sensiblement égal à celui pendant lequel le micromoteur fait un demi-tour. Le basculement brusque du clapet 14 réduit ainsi au minimum le temps de changement de position du clapet 14, allant de son siège 16 à son siège 17 ou vice versa. Ce qui permet d'éviter d'avoir comme dans les lave-vaisselle connus, une trop longue durée dans le changement de position du clapet 14, où l'eau est simultanément dirigée dans les deux voies de sorties 12 et 13 du distributeur au lieu de l'être dans une seule de ces voies, au moment où un lavage exige par exemple, au niveau des moulinets 5, 6, 7, des jets d'eau puissants.

Une liaison mécanique souple réalisée par le ressort 31 entre la manivelle 30 et le téton d'entraînement 25 de la tige de commande 22 permet, au cas où le clapet 14 ou la tige de commande 22 est au cours de son déplacement bloquée dans une position quelconque et le micromoteur 28 reste sous tension, d'éviter une détérioration de ce micromoteur.

En effet, grâce à un allongement élastique du ressort 31, le micromoteur 28 peut continuer à tourner sans être gravement gêné par ce blocage.

Dans le cas où un lavage des articles d'une vaisselle fragile par exemple exige au niveau des moulinets 5, 6, 7 des jets d'eau peu puissants, le volet de verrouillage 32 du dispositif de distribution d'eau est déplacé de manière à faire rentrer le téton de blocage 26 dans l'encoche 34 de la rampe de came 33 (figure 4). La tige coulissante de commande 22 est alors immobilisée par ce volet de verrouillage 32, le clapet 14 est de ce fait maintenu dans une position médiane permettant à l'eau refoulée par la pompe 9 d'être, dans le distributeur 10, divisée en deux et dirigée simultanément sur les deux voies de sorties 12 et 13. La pression des jets d'eau au niveau des moulinets 5, 6, 7 est également divisée. Leur puissance devient réduite. Le téton d'entraînement 25 se trouve à ce moment coaxial avec l'arbre 29 du micromoteur 28 et ce micromoteur peut ainsi continuer à tourner normalement. Quand la voie de sortie 13 du distributeur 10 doit être fermée pour laisser uniquement ouverte la voie de sortie 12 pour alimenter par exemple un seul moulinet d'arrosage dans un cas d'un lavage spécial, le volet de verrouillage 32 est déplacé pour forcer le téton de blocage 26 à se mettre sur la partie constituant la butée 35 de sa rampe de came 33 (figure 3). La tige de commande 22 est alors bloquée, d'un côté par le clapet 14, qui s'appuie sur son siège 17 et du côté opposé par la butée 35 du volet de verrouillage à came 32.

Le fonctionnement d'un lave-vaisselle équipé d'un dispositif de distribution d'eau décrit dans les paragraphes précédents est ainsi particulièrement souple et efficace. Deux degrés de puissance de jets d'eau d'arrosage peuvent être en outre obtenus dans un tel lave-vaisselle.

Selon un deuxième exemple de réalisation de l'invention, partiellement et schématiquement illustré dans la figure 5, un lave-vaisselle 40 comprend d'une manière habituelle comme dans le premier exemple une cuve 41 dont le fond 42 est représenté, des paniers à vaisselles, des moulinets d'arrosage non représentés, une pompe à liquide 43 dont la turbine 44 entraînée par un moteur 45 aspire du liquide accumulé dans le fond de la cuve 41 et le refoule dans un distributeur 46 d'un dispositif de distribution d'eau 50, ce distributeur 46 ayant une voie d'entrée 47 et deux voies de sorties 48 et 49. Dans cet exemple, la pompe 43 et le distributeur 46 sont montés à l'intérieur de la cuve 41. Le carter de la pompe 43 et le corps du distributeur 46 font partie d'une même pièce, réalisée en plusieurs éléments assemblés, deux par exemple 51 et 52. La voie d'entrée 47 du distributeur 46 joue en même temps le rôle d'une tubulure de sortie de la pompe 43. Dans cet exemple de réalisation de l'invention en dehors des économies de matières premières et de main-d'œuvre réalisées, des problèmes qui pourraient se poser dans le raccordement entre la pompe 43 et le distributeur 46 sont avantageusement supprimés. Le distributeur 46 comprend comme dans le premier exemple, un clapet pivotant 53 entraîné par un système mécanique de commande 54 analogue au système 21. Ce système de commande 54 comprend une tige coulissante de commande 55 maintenue coulissante dans les deux sens par un support à glissières 56 et muni sur sa longueur d'un téton latéral d'entraînement 57, d'un téton latéral de commande 58 du clapet 53 et un micromoteur 59 muni d'une manivelle 60 dont l'un des bras est fixé sur son arbre 61 et l'autre bras est relié au téton d'entraînement 57 de la tige de commande par un ressort 62, le téton de commande 58 étant engagé dans un trou d'un levier 63 solidaire du clapet 53. La tige de commande 55, se trouvant avec son micromoteur d'entraînement 59 à l'extérieur de la cuve 41, pénètre partiellement à l'intérieur de celle-ci pour être relié au clapet 53. Un joint 64 du type à soufflet par exemple assure une étanchéité au liquide entre la tige de commande 55 et le fond 42 de la cuve 41. Le clapet 53 pivotant autour d'un axe 65 est appliqué d'une manière étanche sur des sièges 66, 67 et 68, 69. Selon une variante de réalisation illustrée dans la figure 5, le clapet 53 comprend sur son côté aval par rapport au courant de liquide refoulé par la pompe 43, un épaississement 70 donnant naissance par création d'une incurvation de ses deux faces latérales vers l'extérieur, à deux déflecteurs pour liquide 71 et 72. Le courant de liquide refoulé par la pompe 43 est guidé par le clapet 53 pour être dirigé soit dans la voie de sortie 48 soit dans la voie de sortie 49. Lors de sa rencontre avec le déflecteur correspondant 71 ou 72, le courant de liquide refoulé par la pompe 43 suit la rampe de ce dernier, saute par-dessus le siège 68 ou 69 correspondant du clapet 53 et se rue vers la voie de sortie ouverte 48 ou 49. Si un jeu existe entre le clapet 53 et ce siège 68 ou 69, la présence de ce déflecteur 71 ou 72 permet d'éviter une ruée du courant de liquide sur ce siège et par conséquent d'éviter une fuite de liquide dans la voie de sortie fermée. Selon cette structure, pour obtenir une bonne efficacité du distributeur 46, il n'est exigé une étanchéité entre le clapet 53 et ses sièges, que du côté amont du clapet c'est-à-dire non pourvu de déflecteurs 71, 72. La réalisation du distributeur 46 est, de ce fait, avantageusement facilitée.

## Revendications

1. Dispositif de distribution d'eau ayant une pompe à liquide (9), un distributeur à une voie d'entrée (11, 47) et deux voies de sortie (12, 13 ; 48, 49), pourvu d'un clapet (14, 53) commandé par un système mécanique à micromoteur (28, 59) et à tige coulissante de commande (22, 55) et pouvant fermer une de ces voies de sortie et mettre l'autre voie de sortie en communication avec la voie d'entrée, caractérisé en ce qu'il comprend dans ce système mécanique au niveau de la tige axialement coulissante de commande (22, 55) du clapet (14, 53), un téton de blocage (26) en saillie latéralement (26), et un volet de verrouillage (32) coulissant dans une direction orthogonale à celle de la tige de commande (22, 55), comprenant dans son corps une découpe formant une rampe de came (33) coopérant avec ce téton latéral de blocage (26) et permettant soit d'immobiliser le clapet (14, 53) dans une position de fermeture d'une des voies de sortie (13, 49) du distributeur (10, 46) ou dans une position médiane mettant en communication simultanément les deux voies de sorties (12, 13 ; 48, 49) du distributeur (10, 46) avec la voie d'entrée (11, 47) de ce dernier et soit de laisser le clapet (14, 53) libre dans son changement périodique de position de fermeture des voies de sorties (12, 13 ; 48, 49) du distributeur (10, 46).

2. Dispositif selon la revendication 1, caractérisé en ce qu'il comprend dans le volet de verrouillage (32) du système mécanique de commande du clapet (14, 53), une découpe formant une rampe de came (33) présentant suivant l'axe de coulissement de ce volet, en premier lieu à une de ses extrémités, une partie formant une encoche profonde (34) dont la largeur est légèrement supérieure à la dimension du téton de blocage (26), en deuxième lieu, à sa deuxième extrémité, une partie formant une butée (35) latéralement décalée par rapport à la paroi (36) la plus éloignée des deux parois de l'encoche (34) d'une distance égale à la moitié de la distance D de déplacement de la tige de commande (22, 55) dans la mise du clapet (14, 53) dans ses deux positions de fermeture des voies de sorties (12, 13 ; 48, 49) du distributeur (10, 46), et en troisième lieu, dans sa zone centrale, une partie formant un dégagement (37) sur les deux côtés latéraux d'une distance mesurée symétriquement par rapport à l'axe (38) de l'encoche (34), au moins égale à la distance D de déplacement de la tige de commande (22, 55) augmentée d'une longueur égale à la dimension du têton de blocage (26).

3. Dispositif selon la revendication 1, caractérisé en ce qu'il comprend un clapet (14, 53) ayant sur son côté aval par rapport au courant de liquide refoulé par la pompe (43) un épaississement (70) donnant naissance par création d'une incurvation de ses deux faces latérales, vers l'extérieur, à deux déflecteurs pour liquide (71, 72).

4. Lave-vaisselle ayant dans sa cuve plusieurs paniers à vaisselle respectivement arrosés par des moulinets, caractérisé en ce qu'il comprend dans l'alimentation de ces moulinets d'arrosage, un dispositif de distribution d'eau selon l'une des revendications 1 à 3.

## Claims

1. A water distributing device including a liquid pump (9), a manifold having an inlet passage (11, 47) and two outlet passages (12, 13 ; 48, 49) and provided with a flap valve (14, 53) which is controlled by a mechanical system including a small motor (28, 59) and a movable control rod (22, 55) and which is adapted to close one of said outlet passages and to communicate the other outlet passage to the inlet passage, characterized in tat said device comprises within said mechanical system at the level of the axially movable control rod (22, 55) of the flap valve (14, 53) a laterally projecting locking pin (26) and a latching slide member (32) movable in one direction perpendicularly to said control rod (22, 55) and formed in its body with a recess shaped like a cam ramp (33) and cooperating with said lateral locking pin (26) to locate the flap valve (14, 53) in either a closing position in which it closes one of the outlet passages (13, 49) of the manifold (10, 46) or in a central position in which it concurrently communicates the two outlet passages (12, 13 ; 48, 49) of the manifold (10, 46) with the inlet passage (11, 47) of the manifold, or to release the flap valve (14, 53) in its periodic change of the closing position of the outlet passages (12, 13 ; 48, 49) of the manifold (10, 46).

2. A device as claimed in claim 1, characterized in that it comprises in the latching slide member (32) of the mechanical control system for the flap valve (14, 53) a recess forming a cam ramp (33) which in the direction of the axis of movement of said slide firstly includes on one of the ends thereof a portion forming a deep notch (34) having a slightly greater width than the dimension of the locking pin (26), and secondly includes on its second end a portion forming an abutment (35), said portion being offset laterally with respect to the farthest wall (36) of the two walls of the notch (34) by a distance equal to half the path D of movement of the control rod (22, 55) upon moving the flap valve (14, 53) into its two closing positions for the outlet passages (12, 13 ; 48, 49) of the manifold (10, 46), and thirdly includes in its central section a portion forming a recess (37) which extends on either side of the axis (38) of the notch (34) measured symmetrically thereto across a distance at least equal to the path D of movement of the control rod (22, 55) and enlarged by a length equal to the thickness of the locking pin (26).

3. A device as claimed in claim 1, characterized in that it comprises a flap valve (14, 53) which on the side that is downstream relative to the liquid flow delivered by the pump includes an enlarged portion (70) which by means of an outward curvature of its two side faces constitutes two liquid deflecting portions (71, 72).

4. A dish washing machine comprising a plurality of dish cages in its vat, each dish cage being sprayed by rotary spray nozzles, characterized in that it comprises in the feeding system for said rotary spray nozzles a water distribution device as claimed in any of the claims 1 to 3.

## Ansprüche

1. Wasserverteilvorrichtung mit einer Flüssigkeitspumpe (9), einem Verteiler mit einem Einlaßkanal (11, 47) und zwei Auslaßkanälen (12, 13 ; 48, 49) der mit einem Klappenventil (14, 53) versehen ist, das von einem mechanischen System mit Mikromotor (28, 59) und verschiebbarer Steuerstange (22, 55) gesteuert ist und einen dieser Ausgangskänale schließen und den anderen Ausgangskanal mit dem Einlaßkanal verbinden kann, dadurch gekennzeichnet, daß sie in diesem mechanischen System auf der Höhe der axial verschiebbaren Steuerstange (22, 55) des Klappenventils (14, 53) einen seitlich vorspringenden Blockierungszapfen (26) und einen Verriegelungsschieber (32) aufweist, der in einer Richtung senkrecht zu der Steuerstange (22, 55) verschiebbar ist und in seinem Körper einen Ausschnitt in Form einer Kurvenrampe (33) aufweist, die mit dem seitlichen Blockierungszapfen (26) zusammenwirkt und entweder das Klappenventil (14, 53) in einer Schließstellung, wo es einen der Ausgangskanäle (13, 49) des Verteilers (10, 46) verschließt, oder in einer Mittelstellung, wo es die zwei Ausgangskanäle (12, 13 ; 48, 49) des Verteilers (10, 46) gleichzeitig mit dem Einlaßkanal (11, 47) des Verteilers verbindet, feststellt oder das Klappenventil (14, 53) freiläßt in seinem periodischen Wechsel der Schießstellung der Ausgangskanäle (12, 13 ; 48, 49) des Verteilers (10, 46).

2. Vorrichtung nach Anspruch 1, dadurch gekennzeichnet daß sie im Verriegelungsschieber (32) des mechanischen Steuerungssystems des Klappenventils (14, 53) einen Ausschnitt aufweist, der eine Kurvenrampe (33) bildet, die in Richtung der Verschiebungsachse dieses Schiebers an erster Stelle an einem ihrer Enden einen Teil aufweist, der einen tiefen Einschnitt (34), dessen Breite geringfügig größer als die Abmessung des Blockierungszapfens (26) ist, bildet, an zweiter Stelle an ihrem zweiten Ende einen Teil aufweist, der einen Anschlag (35) bildet, der seitlich bezüglich der am weitesten entfernten Wand (36) der zwei Wände des Einschnitts (34) um eine Strecke gleich der halben Verschiebungsstrecke D der Steuerstange (22, 55) beim Verstellen des Klappenventils (14, 53) in seine zwei Schließstellungen der Ausgangskanäle (12, 13 ; 48, 49) des Verteilers (10, 46) versetzt ist, und die an dritter Stelle in ihrem Mittelabschnitt einen Teil aufweist, der eine Ausnehmung (37) bildet, die sich an den beiden Seiten der Achse (38) des Einschnitts (34) symmetrisch dazu gemessen über eine Strecke mindestens gleich der Verschiebungsstrecke D der Steuerstange (22, 55), vergrößert um eine Länge gleich der Dicke des Blockierungszapfens (26) erstreckt.

3. Vorrichtung nach Anspruch 1, dadurch gekennzeichnet, daß sie ein Klappenventil (14, 53) aufweist, das an seiner bezüglich des von der Pumpe geförderten Flüssigkeitsstroms strombwärts liegenden Seite eine Verdickung (70) aufweist, die durch eine Krümmung ihrer beiden Seitenflächen nach außen zwei Flüssigkeitsdeflektoren (71, 72) bildet.

4. Geschirrspülmaschine, die in ihrem Bottich mehrere Geschirrkörbe aufweist, die jeweils durch Drehsprühdüsen besprüht werden, dadurch gekennzeichnet, daß sie in der Speisung dieser Drehsprühdüsen eine Wasserverteilvorrichtung nach einem der Ansprüche 1 bis 3 aufweist.

# FIG_1

# FIG_2

# FIG_3

# FIG_4

# FIG_5